# EUROPÄISCHE PATENTANMELDUNG

(11) **EP 2 767 165 A1**
(43) Veröffentlichungstag der Anmeldung: **20.08.2014**
(21) Anmeldenummer: 14155033.5
(22) Anmeldetag: 13.02.2014
(51) Int. Cl.: A01N 65/10, A01M 29/12

(54) **Mittel zum Vertreiben von Nagern**

(30) Priorität: 15.02.2013 DE 202013100694 U; 11.06.2013 DE 202013102492 U
(71) Anmelder: Brockmann, Harald, 48529 Nordhorn (DE)
(72) Erfinder: Brockmann, Harald, 48529 Nordhorn (DE)
(74) Vertreter: Habbel, Ludwig

(57) **Zusammenfassung**

Die Erfindung schlägt ein Mittel zum Vertreiben von Schädlingen vor, insbesondere von Nagern wie Kaninchen, Ratten, Mäusen und / oder Maulwürfen, mit einem Wirkstoff, der Aromastoffe der Ferulapflanze enthält.

## Beschreibung

Die Erfindung betrifft ein Mittel zum Vertreiben von Nagern.

Aus der Praxis sind unterschiedliche Methoden bekannt, Nagetiere wie Kaninchen, Ratten, Mäuse und Maulwürfe aus dem häuslichen Bereich einschließlich Garten sowie aus gewerblicher Grün- und Nutzflächen zu vertreiben. Beispielsweise sind Schallquellen bekannt, die Schall mit einer für diese Tiere unangenehmen Frequenz aussenden, wobei diese Geräte eine ständige Energiezufuhr erfordern und vergleichsweise aufwendig witterungsgeschützt ausgeführt sein müssen, wenn sie im Freien aufgestellt werden sollen.

Weiterhin sind aus der Praxis verschiedene Mittel in Form von Flüssigkeiten bekannt, die einen für die Nager unangenehmen Geruch verströmen. Häufig ist der von diesen Mitteln abgegebene Geruch nicht nur für die Nager, sondern auch für andere Lebewesen unangenehm, ggf. auch für Menschen.

Der Erfindung liegt die Aufgabe zugrunde, ein Mittel zum Vertreiben von Nagern anzugeben, welches einfach anzuwenden ist, über einen langen Zeitraum wirksam bleibt und problemlos auch im menschlichen Aufenthaltsbereich angewendet werden kann.

Diese Aufgabe wird durch ein Mittel mit den Merkmalen des Anspruchs 1 gelöst.

Die Erfindung schlägt mit anderen Worten ein Mittel auf Basis der Ferulapflanze vor. Als wesentlichen Wirkstoff enthält das Mittel Aromastoffe der Ferulapflanze. Diese Aromastoffe liegen im Stängel der Ferulapflanze vor und können beispielsweise gewonnen werden, indem der Stängel angeritzt und die austretende Flüssigkeit aufgefangen wird. Wichtige Inhaltsstoffe der aus der Ferulapflanze gewonnenen Flüssigkeit sind Ferulasäureester, Asaresinotannol, Ferulasäure, Sesquiterpene, Umbelliferone und Oleum Asae foetidae. Neben den Aromastoffen enthält die Flüssigkeit auch Verdickungsstoffe, so dass die Flüssigkeit zu Harzklumpen getrocknet werden kann. Die Harzklumpen können getrocknet und gemahlen werden, oder sie können in einer Flüssigkeit aufgelöst werden. Abgesehen von dem erwähnten Anritzen können die Stängel auch komplett geerntet und maschinell ausgepresst werden, um die Flüssigkeit zu gewinnen. Oder die Stängel können geerntet und komplett verwertet werden, beispielsweise getrocknet und zu Pulver gemahlen werden.

Die Aromastoffe der Ferulapflanze entwickelt einen Geruch, der dem von Raubtier-Urin ähnlich ist, z. B. Löwen-Urin. Im Gegensatz zu Vertreibungsmitteln, deren Wirkung lediglich darauf beruht, dass sie - auch für das menschliche Empfinden - übel riechen, setzt daher für das vorgeschlagene Mittel bei den Nagern kein Gewöhnungseffekt ein. Vielmehr appelliert diese Geruchswirkung an Urinstinkte der Nager und löst Fluchtreflexe aus. Auch eine über viele Monate anhaltende Wirkung sowie eine mehrfach wiederholte Anwendung des vorschlagsgemäßen Mittels zeigt keine Abstumpfungswirkung bei den Nagern.

Das vorgeschlagene Mittel ist zum Vertreiben von Nagern gut geeignet, wie praktische Versuche ergeben haben. Da es sich bei den Nagern um Fluchttiere handelt, war es zudem überraschend, dass das vorgeschlagene Mittel auch bei anderen, durchaus als wehrhaft bekannten Tieren, eine gute Wirkung gezeigt hat, namentlich bei Wildschweinen. Flurschäden, die durch Wildschweine verursacht werden, können mit dem vorgeschlagenen Mittel verringert werden, indem die Wildschweine beispielsweise von Feldern und Wiesen ferngehalten werden können. Das zum Vertreiben von Nagern geeignete, vorgeschlagene Mittel kann daher auch zum Vertreiben anderer Tiere bzw. Tierarten verwendet werden.

Aufgrund dieser instinktbehafteten Wirkung bei den zu vertreibenden Tieren kann das vorschlagsgemäße Mittel in einer sehr geringen Dosierung des Wirkstoffs angewendet werden, so dass eine Geruchsbelästigung für den Menschen vermieden werden kann. Auf diese Weise kann das Mittel problemlos auch im häuslichen Bereich dort angewendet werden, wo Menschen sich aufhalten. Insbesondere bei der Anwendung gegen Nager, beispielsweise in Wohn- und Lagerräumen, stellt dies einen großen Vorteil dar.

Die lang anhaltende Wirkung des Mittels bedeutet lange Erneuerungsintervalle bei der Handhabung des Mittels und somit einen vergleichsweise geringen Zeitaufwand. Für private Anwender stellt dies einen Komfort-Aspekt dar, und für gewerbliche sowie kommunale Anwender bedeutet dies einen wirtschaftlichen Vorteil.

Da die Ferulapflanze eine Fenchel-Art ist und zu den Lebensmitteln zählt, stellen die daraus gewonnenen Aromastoffe keine Gefahrstoffe dar. Daher muss das als Biozid geltende, vorschlagsgemäße Mittel nicht zugelassen werden, so dass die Herstellung des Wirkstoffs nicht nur völlig natürlich erfolgen kann, sondern auch die Herstellungskosten des Mittels nicht durch Zulassungsverfahren, Gefahrgutuntersuchungen und dergleichen belastet werden. Zudem ist sichergestellt, dass das vorschlagsgemäße Mittel für den Menschen gesundheitlich völlig unbedenklich ist, was wiederum die Anwendungsmöglichkeiten des Mittels im menschlichen Aufenthaltsbereich begünstigt. Das vorschlagsgemäße Mittel kann daher die Vorteile einer hohen Wirksamkeit, natürlicher Inhaltsstoffe und einer wirtschaftlichen Herstellbarkeit vereinen.

Es kann mit den geschilderten Vorteilen vorgesehen sein, die für das vorschlagsgemäße Mittel zu verwendenden Inhaltsstoffe der Ferulapflanze in ihrer natürlich gewonnenen Form zu verwenden, wie weiter oben bereits beschrieben, oder sie in Form eines Extraktes zu verwenden, der aus der Pflanze bzw. deren Flüssigkeit gewonnen wird. Es besteht jedoch auch die Möglichkeit, die zu verwendenden Inhaltsstoffe synthetisch herzustellen.

Vorteilhaft kann vorgesehen sein, dass der Wirkstoff nicht als Pulver, sondern als Flüssigkeit vorliegt. Dies ermöglicht eine flüssige Darreichungsform des Mittels, welche gut an Oberflächen haftet bzw. in Oberflächen eindringt, so dass beispielsweise nicht das Problem besteht, dass das Mittel durch Windeinwirkung fortgeweht werden kann.

Vorteilhaft kann vorgesehen sein, den Wirkstoff nicht unmittelbar anzuwenden, z. B. als Flüssigkeit, sondern vielmehr ein Feststoff-Substrat mit dem Wirkstoff zu tränken. Auf diese Weise ist eine besonders einfache Anwendung für den Benutzer möglich, da beispielsweise keine Behälter mit einem flüssigen Wirkstoff umkippen können, was eine unerwünscht hohe Konzentration des Wirkstoffs im Aufenthaltsbereich des Menschen verursachen könnte. Selbst wenn ein Behälter, der das Feststoff-Substrat enthält, umkippen und versehentlich an falscher Stelle ausgeschüttet werden sollte, so lässt sich das Feststoff-Substrat problemlos wieder einsammeln und in den Behälter zurückbringen, so dass die Bindung des Wirkstoffs an das Feststoff-Substrat, indem das Feststoff-Substrat mit dem Wirkstoff getränkt ist, eine besonders leichte Handhabung und Anwendung des Mittels ermöglicht.

Vorteilhaft kann vorgesehen sein, dass der als Pulver oder als Flüssigkeit hergestellte Wirkstoff nicht in reiner, unverdünnter Form vorliegt, sondern vielmehr in einer als Trägerstoff bezeichneten Substanz, so dass die Konzentration des Wirkstoffs in dem Mittel reduziert ist im Vergleich zu der unverdünnten Form des Wirkstoffs. Dabei ist vorgesehen, dass der Wirkstoff in einer Menge dosiert wird, die höchstens 40 Vol-% der Menge des Trägerstoffs beträgt. Auf diese Weise wird die Anwendung des Wirkstoffs für den Benutzer weiter vereinfacht. Durch den Verdünnungseffekt, den der Trägerstoff für den Wirkstoff bewirkt, kann eine feine Verteilung des Wirkstoffs erheblich einfacher ermöglicht werden, als wenn der Wirkstoff in unverdünnter oder konzentrierter Form vorläge. Zudem ist eine vergleichsweise schwache Dosierung des Wirkstoffs, wie bereits erwähnt, immer noch stark wirksam, so dass durch den Verdünnungseffekt, den der Trägerstoff bewirkt, das Mittel vorteilhaft besonders wirtschaftlich werden kann, wenn ein Trägerstoff gewählt wird, wel-cher preiswerter ist als der Wirkstoff.

Wenn eine Flüssigkeit als Trägerstoff verwendet wird, kann beispielsweise Wasser den Trägerstoff bilden, so dass diese Trägerstoff und den Wirkstoff enthaltende Flüssigkeit beispielsweise versprüht werden kann, was eine gleichmäßige und fein verteilte Dosierung ermöglicht. Dies betrifft sowohl den Fall, dass die Flüssigkeit vom Anwender selbst Auch ein pulverförmiger Wirkstoff kann in einem flüssigen Trägerstoff - beispielsweise Wasser - als Suspension, Emulsion oder gelöst vorliegen, wobei alternativ ein pulverförmiger Wirkstoff in einem festen Trägerstoff-beispielsweise Sand, Holzmehl oder dergleichen - vorliegen kann.

Die für die Verwendung eines Trägerstoffs beschriebenen Vorteile ergeben sich insbesondere, wenn der Anteil des Wirkstoffs am Trägerstoff noch geringer ist, beispielsweise wenn die Menge des Wirkstoffs höchstens 10 Vol-% der Menge des Trägerstoffs beträgt.

Vorteilhaft kann vorgesehen sein, dass das Substrat Pflanzenfasern enthält. Diese lassen sich problemlos mit einer Flüssigkeit tränken, beispielsweise mit dem unverdünnten, flüssigen, oder dem in einer Trägerflüssigkeit vorliegenden flüssigen oder pulverförmigen Wirkstoff. Wie der Wirkstoff selbst können die Pflanzenfasern in ökologisch vorteilhafter Weise naturbelassen sein.

Das Substrat kann vorteilhaft Pflanzenfasern in Form von Stücken aus Kokosschalen enthalten. Die Fasern der Kokosschalen weisen die vorteilhaften Eigenschaften auf, sich bei Trockenheit zu öffnen und bei Feuchtigkeit zu schließen, ähnlich wie dies beispielsweise von Tannenzapfen bekannt ist. Durch diese Eigenschaft wird vermieden, dass der Wirkstoff, mit dem die Kokosstücke getränkt sind, durch Niederschläge vorschnell aus dem Feststoff-Substrat herausgewaschen wird. Umgekehrt öffnen sich die Kokosfasern bei wieder einsetzender Trockenheit, so dass dann die Wirkung des vorschlagsgemäßen Mittels wieder in besonders hohem Maße eintritt. Der durch die Kokosfasern geschaffene Schutz für den Wirkstoff gegen Ausspülen bewirkt eine besonders lang anhaltende Wirksamkeit des vorschlagsgemäßen Mittels.

## Patentansprüche

1. Mittel zum Vertreiben von Nagern,
wie Kaninchen, Ratten, Mäusen und / oder Maulwürfen, mit einem Wirkstoff,
wobei der Wirkstoff Aromastoffe der Ferulapflanze enthält.

2. Mittel nach Anspruch 1,
**dadurch gekennzeichnet,**
**dass** das Mittel ein mit dem Wirkstoff getränktes Feststoff-Substrat enthält.

3. Mittel nach Anspruch 1 oder 2,
**dadurch gekennzeichnet,**
**dass** der Wirkstoff in einem Trägerstoff vorliegt, wobei die Menge des Wirkstoffs höchstens 40 Vol-% der Menge des Trägerstoffs beträgt.

4. Mittel nach Anspruch 3,
**dadurch gekennzeichnet,**
**dass** die Menge des Wirkstoffs höchstens 10 Vol-% der Menge des Trägerstoffs beträgt.

5. Mittel nach Anspruch 3 oder 4,
**dadurch gekennzeichnet,**
**dass** eine Flüssigkeit den Trägerstoff bildet.

6. Mittel nach Anspruch 5,
**dadurch gekennzeichnet,**
**dass** der Trägerstoff Wasser enthält.

7. Mittel nach einem der Ansprüche 2 bis 6,
**dadurch gekennzeichnet,**
**dass** das Substrat Pflanzenfasern enthält.

8. Mittel nach Anspruch 7,
**dadurch gekennzeichnet,**
**dass** das Substrat Stücke aus Kokosschalen enthält.
